# FASCICULE DE BREVET EUROPEEN

(11) **EP 3 643 607 B1**
(45) Date de publication et mention de la délivrance du brevet: **06.01.2021**
(21) Numéro de dépôt: 19204396.6
(22) Date de dépôt: 21.10.2019
(51) Int. Cl.: B64C 27/00

(54) **DISPOSITIF ANTIVIBRATOIRE COMPACT ET VEHICULE**
KOMPAKTE SCHWINGUNGSDÄMPFUNGSVORRICHTUNG UND FAHRZEUG
COMPACT ANTI-VIBRATION DEVICE AND VEHICLE

(30) Priorité: 26.10.2018 FR 1801133
(43) Date de publication de la demande: 29.04.2020
(73) Titulaire: Airbus Helicopters, 13725 Marignane Cedex (FR)
(72) Inventeur: Chapuis-Desplanques, Anne-Claire, 13250 Saint-Chamas (FR); Rouchon, Thibaut, 13111 Coudoux (FR); Manfredotti, Thomas, 06480 La Colle sur Loup (FR)
(74) Mandataire: GPI Brevets

(56) Documents cités:
- CN-A- 105 972 370
- FR-A1- 2 777 860
- FR-A1- 2 795 386
- FR-A1- 2 951 698

## Description

La présente invention concerne un dispositif antivibratoire compact et un véhicule muni d'un tel dispositif antivibratoire. Ce véhicule peut être par exemple un aéronef et notamment mais pas exclusivement un aéronef ayant une voilure tournante, et par exemple un hélicoptère.

La présente invention se situe donc dans le domaine des mécanismes antivibratoires, et notamment des mécanismes destinés à réduire les vibrations exercées sur un aéronef en général et d'un giravion en particulier.

Dans le cas d'un aéronef ayant une voilure tournante, les passagers et des équipements de l'aéronef subissent des vibrations générées par les différents rotors et ensembles mécaniques de l'appareil. En particulier sur un hélicoptère des vibrations perceptibles se produisent à une fréquence principale égale au produit du nombre de pales du rotor principal et de la fréquence de rotation de ce rotor principal.

Pour optimiser le confort des passagers de l'aéronef ainsi que la durée de vie ou le fonctionnement d'équipements de l'aéronef, cet aéronef peut comprendre de multiples systèmes pour au moins atténuer les vibrations subies, et notamment les vibrations produites à la fréquence principale précitée.

A cet effet, un aéronef à voilure tournante peut comprendre divers systèmes entre une source de vibrations et un corps à isoler d'un point de vue vibratoire tels que par exemple des organes massiques agencés dans les pales ou encore des résonateurs formant des systèmes connus sous la marque « sarib® ».

Le document FR 3033543 décrit un tel résonateur pour barre de suspension.

En outre, l'aéronef peut comprendre dans une cabine des systèmes actifs connus sous l'acronyme « AVCS », des systèmes à plots ou encore des dispositifs antivibratoires passifs.

Par exemple, chaque siège peut être équipé d'un dispositif antivibratoire passif qui est mécaniquement interposé entre un plancher et l'assise du siège. Un dispositif antivibratoire passif pour siège peut comprendre par exemple un ou plusieurs résonateurs.

Le document FR 2951700 décrit un dispositif antivibratoire passif muni d'un couple d'organes de filtration de vibrations disposés tête-bêche. Chaque organe de filtration est articulé par deux pivots à un plancher et par deux pivots à un siège. La présence des pivots induit un encombrement non négligeable de l'ordre de plusieurs centimètres.

Ce mécanisme est efficace. Toutefois un passager assis sur le siège pose ses pieds sur le plancher et peut alors ressentir des vibrations par ses pieds. Le passager peut ainsi ressentir un certain inconfort. Pour y remédier, un marchepied peut être fixé au siège ou au dispositif antivibratoire mais un tel agencement peut être délicat. Alternativement, il est envisageable de suspendre le plancher à des dispositifs du type du document FR 2951700 mais la présence des pivots impliquerait de relever le plancher de plusieurs centimètres.

Un système actif de type AVCS présente l'avantage de traiter des vibrations à l'échelle de toute la cabine. Néanmoins, le réglage d'un tel système est très difficile pour obtenir un effet antivibratoire localement important, par exemple au niveau des pieds d'un passager, tout en atteignant des performances optimales pour le reste de la cabine. Un tel système actif de type AVCS est en outre difficilement intégrable dans un espace restreint.

Les systèmes à plots sont intéressants pour supporter des équipements présents dans la cabine. En effet, un système à plots portant un équipement peut permettre de décaler la fréquence d'apparition d'un mode de vibrations de l'équipement par rapport à la fréquence de l'excitation. De plus, les plots présentent de fait un encombrement non négligeable qui peut s'avérer rédhibitoire. De plus, l'atténuation des vibrations apportée par un résonateur est plus importante qu'avec un système de plots.

Par ailleurs, le document EP 0705950 B1 est éloigné de la problématique de l'invention en visant à produire un sol insonorisé à l'aide d'un faux plancher à plots.

De même, le document CA2914212 décrit un tapis d'amortissement d'impacts.

Le document US 5365710 est aussi éloigné de l'invention.

Ces documents EP 0705950, CA2914212 et US 5365710 sont donc complètement éloignés de l'invention.

Le document FR 2951698 décrit un dispositif pour réduire les vibrations d'un rotor principal d'un giravion. Le dispositif comporte un support ainsi qu'une pluralité d'éléments pesants et de rouleaux. Chaque élément pesant comporte deux premières ouvertures en regard de deux deuxièmes ouvertures du support. Chaque rouleau traverse alors une première ouverture et une deuxième ouverture.

Le document FR 2795386 décrit un dispositif de suspension vibratoire avec un ressort de torsion entre un batteur et une structure.

Le document FR 2777860 décrit un dispositif de suspension pour boîte de transmission de puissance. Le dispositif de suspension comporte des leviers. Chaque levier est articulé au sommet de la boîte de transmission de puissance ainsi qu'à une barre oblique et à une barre de traction.

Le document CN 105972370 décrit un niveleur de secousse pour des canalisations. Le niveleur de secousse comporte un anneau d'accrochage relié à quatre masses.

En effet, la présente invention a pour objet de proposer un dispositif antivibratoire compact pouvant notamment, mais pas nécessairement exclusivement, atténuer les vibrations subies par les pieds d'un passager ou d'un équipement posé sur une étagère.

Selon l'invention, un dispositif antivibratoire est muni d'un mécanisme résonateur comportant au moins un résonateur, ledit au moins un résonateur ayant au moins un batteur. Cet au moins un résonateur comprend en particulier un batteur dit un premier batteur s'étendant d'une extrémité encastrée à une extrémité libre battante. Optionnellement, le résonateur peut comprendre au moins un autre batteur.

Cette extrémité libre peut comprendre un organe massique intégré ou peut porter un organe massique amovible. Un tel organe massique peut présenter une masse supérieure au reste du premier batteur. Un tel organe massique peut aussi être réglable en pouvant comprendre un ou plusieurs sous-ensembles amovibles.

De plus, ledit au moins un résonateur comporte un pied par exemple mais non exclusivement en forme de H, le pied étant déformable élastiquement muni d'une première branche et d'une deuxième branche reliées entre elles par un tronçon central, ladite extrémité encastrée étant encastrée à la première branche, la première branche s'étendant d'une première extrémité à une deuxième extrémité configurées chacune pour être fixée rigidement à un support, la deuxième branche s'étendant d'une première zone extrémale à une deuxième zone extrémale configurées chacune pour être fixée rigidement chacune à une source vibrante.

La source vibrante peut prendre la forme d'une plaque appartenant au dispositif antivibratoire ou indépendante du dispositif antivibratoire. La source vibrante peut par exemple être un plancher ou une étagère ou une paroi ou peut être fixée voire posée sur un plancher ou une étagère ou une paroi. La source vibrante peut être reliée rigidement à la deuxième branche du résonateur directement, éventuellement par soudure ou équivalents, ou indirectement via des poutres rigides ou équivalents par exemple. A titre illustratif, chaque zone extrémale est solidaire d'une poutre vissée à la source vibrante.

Alternativement ou de manière complémentaire, le support peut prendre la forme d'une dalle appartenant au dispositif antivibratoire ou indépendante du dispositif antivibratoire. Le support peut former un faux plancher, un support d'équipement... Le support peut être relié rigidement à la première branche du résonateur directement, éventuellement par soudure ou équivalents, ou indirectement via des poutres rigides ou équivalents par exemple. A titre illustratif, chaque extrémité est solidaire d'une poutre vissée au support.

Dès lors, le dispositif antivibratoire peut former un ensemble compact à glisser sous les pieds d'un individu ou un équipement. Le support peut même former le plancher d'une cabine.

Indépendamment de cet aspect, la présence d'un pied élastiquement déformable permet à chaque résonateur du dispositif antivibratoire de former un organe dénommé « compilant mechanism » en langue anglaise, à savoir un mécanisme dépourvu d'articulations. Au lieu de pivots, le résonateur présente une première branche et une deuxième branche, chacune de faibles dimensions comparées aux autres organes du dispositif, qui forment alors des zones de déformation usinées dans la matière. Par exemple, le tronçon central et/ou le premier batteur peut présenter une largeur et/ou une épaisseur supérieure(s) à celle(s) des branches.

La première branche et la deuxième branche d'un résonateur forment chacune une barre de torsion, à savoir une barre élastiquement déformable au moins en torsion autour d'axes de ces barres de torsion. La première branche et la deuxième branche font office d'articulations en pouvant notamment se déformer en torsion tout en apportant de la raideur. Une barre de torsion est reliée rigidement à la source vibrante et l'autre barre de torsion est reliée rigidement au support qui est à isoler au moins partiellement de la source vibrante d'un point de vue vibratoire. Le pied est en outre attaché à un premier batteur, ce premier batteur pouvant être fixé à ce pied ou pouvant former un ensemble monolithique avec le pied.

Le résonateur est ainsi agencé à l'interface entre la source vibrante et le support pour traiter au moins une partie des vibrations émises par la source vibrante afin de limiter la transmission de ces vibrations au support. Lorsque la source vibrante vibre, le premier batteur bat en déformant élastiquement le pied, l'extrémité libre du premier batteur tendant à effectuer un mouvement sensiblement circulaire. Le mouvement du premier batteur est autorisé par la déformation élastique du tronçon central et/ou du pied et notamment la déformation élastique des branches. Les liaisons pivots usuelles sont obtenues non pas par des pivots en tant que tels mais par déformation des branches. Le bras de levier du premier batteur permet d'augmenter le déplacement de l'extrémité libre. La géométrie du résonateur peut être adaptée pour dissiper les vibrations à la fréquence d'antirésonance souhaitée, par exemple à la fréquence principale précitée sur un hélicoptère. Les vibrations selon une direction orthogonale allant de la structure vibrante au support à la fréquence principale précitée sont par exemple dissipées en amont du support.

Un tel mécanisme permet de laisser une liberté de mouvement au résonateur par rapport au support et à la source vibrante sans utiliser des articulations qui présentent de fait des jeux et des frottements. En contrepartie, les zones de déformations de la première branche et de la deuxième branche sont sollicitées en fatigue. De plus, la première branche et la deuxième branche demeurent résiduellement raides.

Ces caractéristiques sont néanmoins intéressantes dans le cas d'un dispositif antivibratoire passif puisque d'une part le premier batteur tend à battre sur une faible amplitude angulaire, de l'ordre de quelques millimètres, et d'autre part le dispositif antivibratoire se doit d'être relativement raide et d'apporter peu d'amortissement.

La suppression de pivots et l'utilisation de branches déformables peuvent permettre d'obtenir un mécanisme résonateur ayant un encombrement réduit, par exemple un mécanisme résonateur contenu dans un pavé de moins d'un centimètre d'épaisseur. Le support et la source vibrante peuvent aussi être minces.

Les coûts de fabrication du mécanisme résonateur peuvent être minimisés, par exemple en utilisant des techniques de fabrication à bas coût comme la découpe laser voire l'impression 3D.

De plus, l'absence d'articulations et donc de pièces d'usure peut présenter de multiples avantages et notamment un gain de masse, une diminution du coût d'assemblage, une maintenance très réduite voire inexistante en raison du caractère passif du dispositif antivibratoire, une utilisation à hautes températures difficile à atteindre avec des paliers élastomères par exemple...

Un tel dispositif antivibratoire est adaptable pour des applications diverses. Le nombre de résonateurs, la forme et la taille de chaque résonateur sont notamment adaptables en fonction des besoins, par exemple en fonction de l'encombrement à atteindre, de la fréquence des vibrations à traiter, de la masse que le support est à même de porter...

En particulier, le dispositif antivibratoire peut permettre de réduire des vibrations verticales de manière globale en portant un plancher complet.

Néanmoins, le dispositif antivibratoire peut être utilisé en complément de systèmes connus pour traiter localement des vibrations, par exemple au niveau des pieds d'un passager ou d'un équipement. La finesse du dispositif antivibratoire peut ainsi éviter d'entraver le déplacement des pieds du passager, par exemple en cas d'évacuation d'urgence.

Le dispositif antivibratoire peut de plus comporter une ou plusieurs des caractéristiques qui suivent.

Le dispositif antivibratoire pouvant comporter au moins deux dits résonateurs, lesdits deux résonateurs peuvent être différents.

Le dispositif antivibratoire peut par exemple comprendre plusieurs résonateurs différents pour filtrer des vibrations à diverses fréquences.

De manière alternative ou complémentaire, le dispositif antivibratoire pouvant comporter au moins deux dits résonateurs, les deux résonateurs peuvent être identiques.

Par exemple, le mécanisme résonateur peut comporter deux paires de résonateurs, les deux résonateurs de chaque paire étant identiques et les résonateurs d'une paire étant différents des résonateurs de l'autre paire. Le mécanisme résonateur comporte alors deux types de résonateurs.

Selon un aspect, le mécanisme résonateur pouvant comporter au moins une paire de deux dits résonateurs, les deux résonateurs d'une paire peuvent être agencés tête-bêche selon une direction, l'extrémité libre du premier batteur d'un résonateur d'une paire étant agencée selon ladite direction entre le pied de ce résonateur et l'extrémité libre du premier batteur de l'autre résonateur de cette paire.

Selon un exemple, le mécanisme résonateur peut comporter quatre résonateurs répartis en deux rangées. Chaque rangée comporte deux résonateurs agencés tête-bêche.

Selon un aspect, le dispositif antivibratoire pouvant comporter au moins une paire de deux dits résonateurs, la première extrémité et la deuxième extrémité de la première branche d'un des deux résonateurs d'un paire peuvent être respectivement rigidement reliées par deux poutres de liaison à la première extrémité et à la deuxième extrémité de la première branche de l'autre résonateur de cette paire, au moins une desdites deux poutres de liaison étant munie d'au moins une attache pour être fixée rigidement au dit support.

La paire de deux résonateurs peut comprendre au moins une poutre transversale reliant lesdites deux poutres de liaison, ladite au moins une poutre transversale pouvant s'étendre entre les deux résonateurs de la dite paire,

Au moins une attache peut prendre la forme d'un orifice ménagé dans une poutre de liaison ou la poutre transversale, une vis ou équivalent pouvant traverser cet orifice pour fixer le mécanisme résonateur au support.

Les poutres de liaison et la poutre transversale peuvent être plus raides que les branches afin que le déplacement du premier batteur déforme les branches et non pas les poutres de liaison et la poutre transversale. Par exemple, les poutres de liaison et la poutre transversale peuvent présenter une largeur et/ou une épaisseur supérieure(s) à celles des branches.

Eventuellement, les poutres de liaison sont parallèles entre elles et orthogonales à chaque poutre transversale.

Selon un aspect, le dispositif antivibratoire pouvant comporter au moins deux dites paires de deux résonateurs, une poutre de liaison peut être commune aux deux paires de deux résonateurs.

L'expression « une poutre de liaison peut être commune » signifie qu'une même poutre de liaison est rigidement liée à la première branche de quatre résonateurs. La poutre de liaison commune est en effet rigidement liée à la première branche d'un premier résonateur, à la première branche d'un deuxième résonateur d'une première paire formée avec le premier résonateur, à la première branche d'un troisième résonateur d'une deuxième paire agencée à côté de et donc adjacente au premier résonateur et à la première branche d'un quatrième résonateur de la deuxième paire agencé à côté de et adjacente au deuxième résonateur.

Eventuellement, les deux premières branches de deux résonateurs adjacents sont alignées.

Selon un aspect, le dispositif antivibratoire pouvant comporter au moins une paire de deux dits résonateurs, la première zone extrémale de la deuxième branche d'un résonateur de ladite paire peut être rigidement reliée par une barre de liaison à la première zone extrémale de la deuxième branche de l'autre résonateur de cette paire, la deuxième zone extrémale de la deuxième branche d'un résonateur de ladite paire étant rigidement reliée par une barre de liaison à la deuxième zone extrémale de la deuxième branche de l'autre résonateur de cette paire ou à la deuxième zone extrémale de la deuxième branche d'un résonateur d'une autre paire.

Chaque barre de liaison peut être plus raide que les branches afin que le déplacement du premier batteur déforme les branches et non pas les barres de liaison. Par exemple, chaque barre de liaison peut présenter une largeur et/ou une épaisseur supérieure(s) à celle(s) des branches.

Des moments peuvent être exercés sur les extrémités des premières branches et les zones extrémales des deuxièmes branches. Pour y remédier, deux résonateurs peuvent être agencés tête-bêche et/ou peuvent être reliés par les poutres de liaison voire les barres de liaison.

Selon un aspect, le dispositif antivibratoire peut comporter au moins une butée pour limiter le battement dudit premier batteur, voire le cas échéant d'un deuxième batteur.

Par exemple, une butée mécanique peut prendre la forme d'un plot fixé sur la source vibrante ou un autre organe pour limiter par interférence de forme le déplacement d'un ou plusieurs batteurs ou du support afin d'éviter une déformation plastique du pied du résonateur.

Par exemple, le dispositif antivibratoire peut être dimensionné pour porter une masse de 20 kilogrammes afin de porter des pieds d'un individu assis sur un siège. Par contre, cet individu peut temporairement se tenir debout sur le support. Dans ce cas de figure, chaque butée limite l'enfoncement du support vers la source vibrante. La butée est inopérante lorsque l'individu est assis sur un siège.

Selon un aspect, le dispositif antivibratoire peut comporter au moins une entretoise pour éviter un contact entre ledit support et ledit premier batteur voire chaque batteur ou entre le premier batteur voire chaque batteur et la source vibrante.

Une telle entretoise peut prendre la forme d'une cale éventuellement en inox et fixée par exemple sur une poutre de liaison, d'une surépaisseur en saillie en élévation d'une poutre de liaison le cas échéant, voire d'une surépaisseur en saillie en élévation du support ou de la surface vibrante.

Le ou les entretoises permettent de ménager un jeu entre chaque résonateur et le support ou la source vibrante pour autoriser la déformation de chaque résonateur.

Selon un aspect, le mécanisme résonateur peut former un ensemble monolithique.

La fabrication d'un tel ensemble peut être facilitée et réalisée à coût réduit.

Selon un aspect, le mécanisme résonateur peut être plat en l'absence de déformation du premier batteur voire de chaque batteur, ledit mécanisme résonateur ayant une épaisseur constante.

Selon un aspect, le dispositif antivibratoire pouvant comprendre le support, le support peut comporter au moins une lumière en vis-à-vis de ladite extrémité libre.

Une telle lumière du support peut favoriser le battement du batteur associé sans interférence.

Selon un aspect, le dispositif antivibratoire comprenant ladite source vibrante, ladite source vibrante comporte au moins une découpe en vis-à-vis de ladite extrémité libre.

Une telle découpe de la source vibrante peut favoriser le battement d'un batteur sans interférence.

Selon un aspect, la première branche et ladite deuxième branche d'un dit résonateur peuvent être différentes ou identiques.

Selon un autre aspect, un résonateur peut comporter un deuxième batteur, le deuxième batteur s'étendant d'une zone encastrée à une zone libre battante, ladite zone encastrée étant encastrée à la deuxième branche.

Outre un dispositif antivibratoire, l'invention peut comprendre un véhicule muni d'un tel dispositif antivibratoire.

Ce véhicule peut être un aéronef, et par exemple un aéronef à voilure tournante. Le véhicule peut aussi être une voiture, un navire, un train... Le véhicule peut être motorisé ou non.

Par exemple, les sièges de la cabine sont équipés de dispositifs passifs selon l'art antérieur. De plus, une partie du plancher devant accueillir les pieds des passagers peut comprendre des dispositifs antivibratoires selon l'invention.

Selon un autre exemple, le plancher est réalisé avec un dispositif antivibratoire selon l'invention.

Chaque dispositif antivibratoire peut être réalisé pour filtrer des vibrations dans un axe perpendiculaire à un plan contenant les branches de chaque résonateur ou selon d'autres axes.

Selon un exemple, un dispositif antivibratoire selon l'invention repose sur une étagère pour porter un équipement.

Selon un autre exemple, un dispositif antivibratoire selon l'invention peut être utilisé pour traiter des vibrations par exemple à la fréquence principale précitée sur un giravion voire aussi à des fréquences proportionnelles à cette fréquence principale précitée.

L'invention et ses avantages apparaîtront avec plus de détails dans le cadre de la description qui suit avec des exemples donnés à titre illustratif en référence aux figures annexées qui représentent :
- la figure 1, une vue éclatée d'un dispositif antivibratoire à un résonateur,
- la figure 2, une vue de dessus d'un mécanisme résonateur ayant deux résonateurs,
- les figures 3 et 4, des vues en trois dimensions d'un dispositif antivibratoire,
- la figure 5, une vue en trois dimensions montrant notamment le mécanisme résonateur du dispositif antivibratoire des figures 3 et 4,
- les figures 6 et 7, des vues d'un résonateur ayant un premier batteur et un deuxième batteur.
- la figure 8, un diagramme illustrant le fonctionnement du dispositif antivibratoire selon les figures 3 et 4, et
- les figures 9 à 11, des schémas illustrant des utilisations possibles de l'invention.

Les éléments présents dans plusieurs figures distinctes sont affectés d'une seule et même référence.

Trois directions X, Y et Z orthogonales les unes par rapport aux autres sont représentées sur certaines figures.

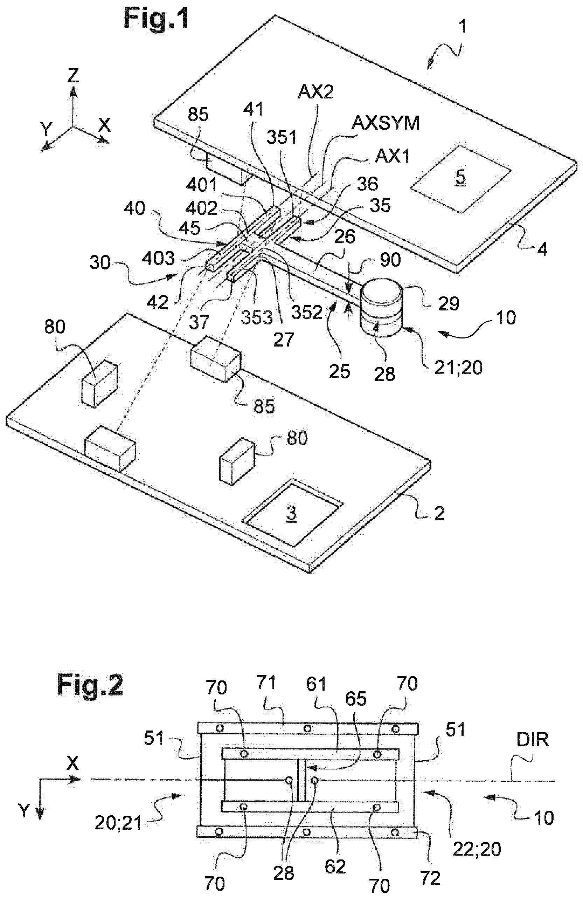

La figure 1 présente un dispositif antivibratoire 1 selon l'invention.

Ce dispositif antivibratoire 1 est muni d'un mécanisme résonateur 10 éventuellement monolithique. Le mécanisme résonateur 10 comporte un ou plusieurs résonateurs 20, et plus exactement un unique résonateur 21 selon l'exemple non restrictif de la figure 1.

Indépendamment du nombre de résonateur, chaque résonateur comporte au moins un batteur et donc un premier batteur 25 apte à effectuer suite à une sollicitation vibratoire un mouvement de battement notamment autour d'un premier axe de rotation AX1. Le premier batteur 25 présente un bras 26 qui s'étend selon une direction longitudinale d'une extrémité encastrée 27 jusqu'à une extrémité libre 28 battante. Cette extrémité libre 28 peut porter un organe massique 29. Cet organe massique 29 peut être présent à demeure ou peut être amovible en tout ou partie. Par exemple, l'organe massique peut comporter plusieurs masses empilées les unes sur les autres. L'organe massique 29 et le bras 26 peuvent former un ensemble monolithique. L'organe massique 29 peut saillir en élévation du bras.

De plus, le résonateur 21 comporte un pied 30 déformable élastiquement. Ce pied est ainsi muni d'une première branche 35 déformable élastiquement et d'une deuxième branche 40 déformable élastiquement reliées entre elles par un tronçon central 45 déformable élastiquement. L'extrémité encastrée 27 du premier batteur est alors encastrée à la première branche 35.

Le pied 30 et au moins le bras du premier batteur 25 peuvent former en ensemble monolithique d'un seul tenant plat, à savoir ayant une épaisseur 90 constante entre une face en vis-à-vis d'un support 4 et une face en vis-à-vis d'une source vibrante 2 décrites par la suite. Eventuellement, seul l'organe massique présente une surépaisseur comparé au reste du mécanisme
Selon un aspect, la première branche 35 peut avoir la forme d'un pavé ou une forme plus complexe par exemple en U.

La première branche 35 s'étend selon sa longueur le long d'un premier axe de rotation AX1 d'une première extrémité 36 à une deuxième extrémité 37. Ainsi, la première branche 35 peut comprendre un premier tronçon 351 comprenant la première extrémité 36 prolongé par un deuxième tronçon 352 solidaire du premier batteur 25, le deuxième tronçon 352 étant lui-même prolongé par un troisième tronçon 353 comprenant la deuxième extrémité 37.

La première branche 35 et notamment le premier tronçon 351 ainsi que le troisième tronçon 353 sont au moins déformables élastiquement en rotation autour du premier axe de rotation AX1.

La deuxième branche 40 peut avoir la forme d'un pavé ou une forme plus complexe. La deuxième branche s'étend selon sa longueur le long d'un deuxième axe de rotation AX2 d'une première zone extrémale 41 à une deuxième zone extrémale 42. Ainsi, la deuxième branche peut comprendre une première partie 401 comprenant la première zone extrémale 41 prolongée par une deuxième partie 402, la deuxième partie 402 étant elle-même prolongée par une troisième partie 403 comprenant la deuxième zone extrémale 42.

La deuxième branche 40 et notamment la première partie 401 ainsi que la troisième partie 403 sont au moins déformables élastiquement en rotation autour du deuxième axe de rotation AX2.

Le tronçon central 45 est fixé à la première branche et à la deuxième branche pour les éloigner l'une de l'autre selon la direction longitudinale. Eventuellement, le tronçon central 45 est fixé au deuxième tronçon 352 et à la deuxième partie 402. Le tronçon central 45 peut avoir la forme d'un pavé ou une forme plus complexe.

La première branche 35 et la deuxième branche 40 peuvent être identiques. Alternativement, la première branche 35 et la deuxième branche 40 peuvent être totalement différentes ou partiellement différentes, en présentant notamment des longueurs différentes selon leurs axe de rotation AX1, AX2 respectifs ou encore des coupes différentes dans des plans perpendiculaires à leurs directions transversales.

Selon un aspect, la première branche 35 et la deuxième branche 40 peuvent être parallèles entre elles.

Eventuellement, la première branche 35 et la deuxième branche 40 peuvent être disposées symétriquement de part et d'autre d'un axe de symétrie AXSYM passant par le tronçon central.

Vu de dessus selon l'axe en élévation Z sensiblement octogonal à la direction longitudinale au repos, le pied a selon l'exemple représenté sensiblement la forme d'un H. Des formes plus complexes sont possibles en fonction de la forme de la première branche et/ou de la deuxième branche.

Selon un autre aspect, la première extrémité et la deuxième extrémité sont configurées pour être fixées directement ou indirectement chacune rigidement à un support 4. Le support 4 peut comporter une lumière 5, à savoir une ouverture/fenêtre, en vis-à-vis de chaque batteur et notamment de l'extrémité libre 28 de chaque premier batteur de chaque résonateur.

En outre, la première zone extrémale 41 et la deuxième zone extrémale 42 sont configurées pour être fixées directement ou indirectement chacune rigidement à une source vibrante 2. La source vibrante 2 peut comporter une découpe 3 en vis-à-vis de l'extrémité libre 28 de chaque résonateur.

Eventuellement, le support 4 et/ou la source vibrante 2 forment des parties du dispositif antivibratoire 1. Le support 4 et/ou la source vibrante 2 peuvent être réalisés à partir de matériaux composites pour présenter une très faible épaisseur, cette faible épaisseur étant éventuellement inférieure à l'épaisseur du mécanisme résonateur.

Selon un aspect, le dispositif antivibratoire 1 peut comporter au moins une butée 80 pour limiter le battement du ou des batteur(s). Selon l'exemple de la figure 1, une butée peut prendre la forme d'un tampon, par exemple agencé sur la source vibrante 2 ou en dehors de cette source vibrante.

Selon un aspect, le dispositif antivibratoire 1 peut comporter au moins une entretoise 85. Chaque entretoise peut contribuer à générer un jeu entre un résonateur et le support ou la source vibrante.

Selon la réalisation de la figure 1, le dispositif antivibratoire 1 peut comprendre un unique résonateur.

Selon d'autres réalisations, le dispositif antivibratoire peut comprendre plusieurs résonateurs, éventuellement identiques ou différents, deux résonateurs pouvant éventuellement former une paire particulière de résonateur.

Ainsi, selon la figure 2 le dispositif antivibratoire 1 peut comprendre une unique paire 51 de résonateurs 21, 22.

Le premier résonateur 21 et le deuxième résonateur 22 d'une paire 51 peuvent être agencés tête-bêche selon la direction DIR. Dès lors, l'extrémité libre du premier batteur du premier résonateur 21 est agencée selon la direction DIR entre le pied de ce premier résonateur 21 et l'extrémité libre du premier batteur du deuxième résonateur 22 de cette paire 51. Les premier batteurs des deux résonateurs peuvent être alignés

Par ailleurs, la première extrémité et la deuxième extrémité de la première branche du premier résonateur 21 peuvent être respectivement rigidement reliées par deux poutres de liaison 61, 62 à la première extrémité et à la deuxième extrémité de la première branche du deuxième résonateur 22. Eventuellement, une ou plusieurs poutres transversales 65 relient les deux poutres de liaison 61, 62 en s'étendant par exemple entre les deux résonateurs 21, 22. La première branche et la deuxième branche du premier résonateur peuvent être parallèles à la première branche et à la deuxième branche du deuxième résonateur.

De plus, au moins une des poutres de liaison 61, 62 est pourvue d'au moins une attache 70. Une telle attache peut prendre la forme d'un orifice de fixation. Eventuellement, une entretoise de type cale est fixée à la face supérieure de chaque poutre de liaison, une telle face supérieure étant en regard du support. Une telle cale peut être collée et/ou vissée à la poutre de liaison et/ou au support.

De même, la première zone extrémale de la deuxième branche du premier résonateur 21 est rigidement reliée par une barre de liaison 71 à la première zone extrémale de la deuxième branche du deuxième résonateur 22.

Dans cette configuration à deux résonateurs, la deuxième zone extrémale de la deuxième branche du premier résonateur de ladite paire 51 peut être rigidement reliée par une barre de liaison 72 à la deuxième zone extrémale de la deuxième branche du deuxième résonateur 22. Eventuellement, une entretoise de type cale est fixée à la face inférieure de chaque barre de liaison, une telle face inférieure étant en regard de la source vibrante. Une telle cale peut être collée et/ou vissée à la barre de liaison et/ou à la source vibrante.

La figure 2 illustre le fait que le mécanisme résonateur 10 puisse former un ensemble monolithique. De plus, le mécanisme résonateur 10 est plat en l'absence de battement du ou des batteurs, le mécanisme résonateur 10 ayant une épaisseur 90 constante à l'exception éventuelle de chaque organe massique.

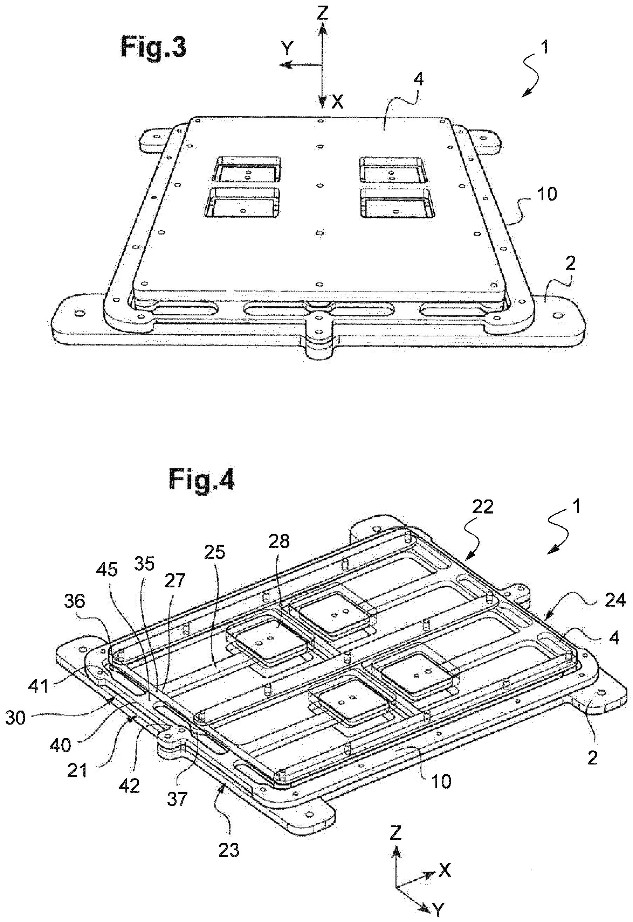

Selon les figures 3 et 4, le dispositif antivibratoire 1 peut comprendre deux paires de résonateurs 21-22, 23-24. Sur la figure 4, le support 4 est rendu transparent pour laisser apparaître les résonateurs.

A l'instar du mécanisme de la figure 2, le mécanisme résonateur 10 peut former un ensemble monolithique. De plus, le mécanisme résonateur 10 est plat en l'absence de battement de chaque batteur, le mécanisme résonateur 10 ayant une épaisseur 90 constante. Seuls les organes massiques saillent en élévation de cette portion à épaisseur constante.

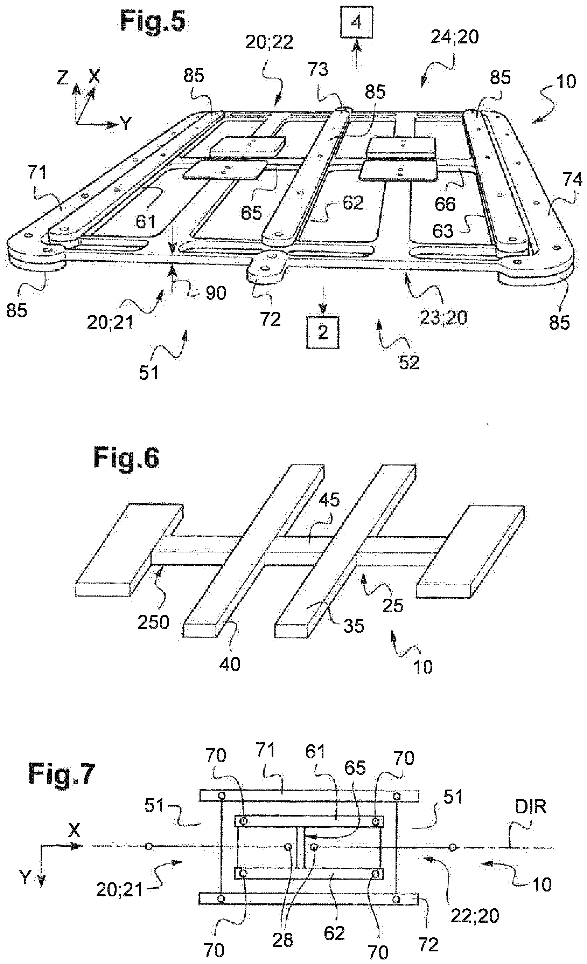

La figure 5 montre le mécanisme résonateur 10 de ce dispositif antivibratoire.

A l'instar de la figure 2, les deux résonateurs 21-22, 23-24 de chaque paire peuvent être agencés tête-bêche.

En outre, chaque paire peut comprendre deux poutres de liaison 61-62, 62-63. Toutefois, une poutre peut être commune aux deux paires.

Ainsi, une première poutre de liaison 61 peut relier la première extrémité de la première branche d'un premier résonateur 21 d'une première paire à la première extrémité de la première branche du deuxième résonateur 22 de cette première paire.

Une troisième poutre de liaison 63 peut relier la première extrémité de la première branche d'un troisième résonateur 23 d'une deuxième paire à la première extrémité de la première branche du quatrième résonateur 24 de cette deuxième paire.

En outre, une deuxième poutre de liaison peut relier la deuxième extrémité de la première branche du troisième résonateur 23, la deuxième extrémité de la première branche du quatrième résonateur 24, la deuxième extrémité de la première branche du premier résonateur 21 et la deuxième extrémité de la première branche du deuxième résonateur 22.

Chaque poutre de liaison peut porter une entretoise 85, par exemple sous la forme d'une cale.

Eventuellement, la première branche du premier résonateur et la première branche du troisième résonateur sont alignées. De même, la première branche du deuxième résonateur et la première branche du quatrième résonateur peuvent être alignées.

Selon un aspect, une première barre de liaison 71 peut relier la première zone extrémale de la deuxième branche d'un premier résonateur 21 d'une première paire à la première zone extrémale de la deuxième branche du deuxième résonateur 22 de cette première paire.

Une quatrième barre de liaison 74 peut relier la première zone extrémale de la deuxième branche d'un troisième résonateur 23 d'une deuxième paire à la première zone extrémale de la deuxième branche du quatrième résonateur 24 de cette deuxième paire.

En outre, une deuxième barre de liaison 72 peut relier la deuxième zone extrémale de la deuxième branche du troisième résonateur 23 à la deuxième zone extrémale de la deuxième branche du premier résonateur 21. Une troisième barre de liaison 73 peut relier la deuxième zone extrémale de la deuxième branche du deuxième résonateur 22 à la deuxième zone extrémale de la deuxième branche du quatrième résonateur 24.

Chaque barre de liaison peut porter une entretoise 85, par exemple sous la forme d'une cale.

Eventuellement, la deuxième branche du premier résonateur et la deuxième branche du troisième résonateur sont alignées. De même, la deuxième branche du deuxième résonateur et la deuxième branche du quatrième résonateur peuvent être alignées.

Les figures 1 à 5 illustrent des résonateurs comprenant un unique batteur.

Toutefois, selon la réalisation de la figure 6, un résonateur peut comporter un deuxième batteur 250. Ce deuxième batteur 250 s'étend d'une zone encastrée à une zone libre battante, la zone encastrée du deuxième batteur étant encastrée à la deuxième branche 40. Le deuxième batteur peut comprendre une ou plusieurs des caractéristiques du premier batteur décrit précédemment. Le deuxième batteur peut être agencé dans l'alignement du premier batteur.

En référence à la figure 7, une paire de résonateurs peut comporter un ou deux résonateurs munis d'un deuxième batteur conformément à la figure 6.

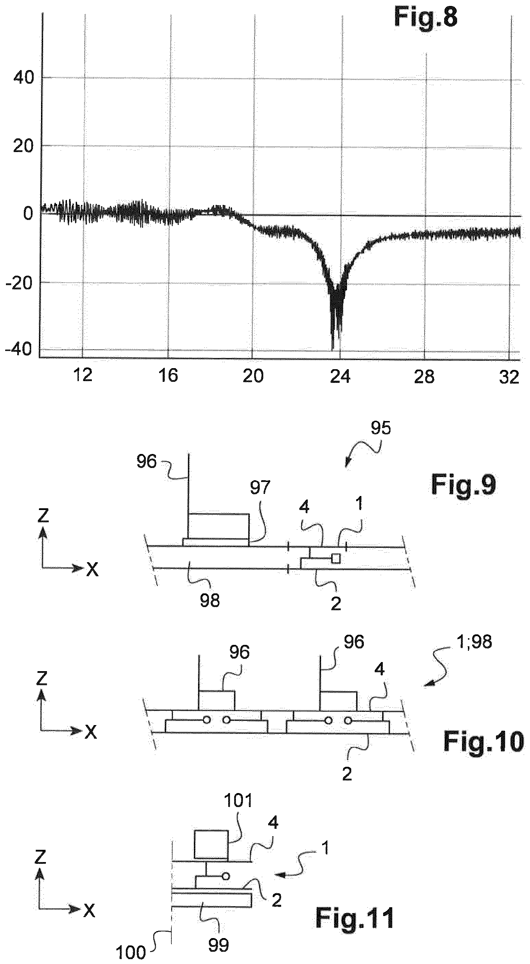

La figure 8 présente un diagramme illustrant le fonctionnement d'un dispositif antivibratoire selon la figure 3. Le mécanisme résonateur a une épaisseur de cinq millimètres permettant sa découpe au jet d'eau à moindre coût à partir d'une plaque d'aluminium 2017. Chaque branche a la forme d'un pavé de cinq millimètres de côté et d'une longueur de cinquante millimètres. Chaque premier batteur porte un organe massique de 150 grammes dimensionné pour filtrer des vibrations se produisant à 25Hz. La raideur est d'environ 20daN /mm avec une contrainte statique d'environ 140Mpa (mégaPascals) avec une masse de 20kg

Le diagramme de la figure 8 illustre l'antirésonance obtenue aux alentours de 25hz lorsqu'une personne de 100 kilogrammes est assise sur un siège et pose ses pieds sur un dispositif antivibratoire selon l'invention, ce diagramme présentant un ratio de l'amplitude des vibrations en décibels de la source et de l'amplitude des vibrations du support en fonction des fréquences en Hertz.

Les figures 9 à 11 illustrent diverses possibilités d'utiliser l'invention, notamment au sein d'un véhicule.

Selon la figure 9, une cabine d'un véhicule 95 peut comprendre un siège 96 porté par un plancher 98 par un système antivibratoire 97 de siège, par exemple du type du brevet FR 2951700. Eventuellement, une partie du plancher situé en théorie sous les pieds d'un individu assis sur ce siège est remplacé par un dispositif antivibratoire selon l'invention. Le support 4 peut être disposé dans l'alignement de la face supérieure du plancher.

Selon la figure 10, tout le plancher peut être remplacé par un dispositif antivibratoire selon l'invention. Les systèmes antivibratoires 97 de la figure 7 peuvent éventuellement être omis.

Selon la figure 11, un dispositif antivibratoire selon l'invention est posé sur une étagère 99 portée par une paroi 100. Un équipement 101 peut alors reposer sur le support 4.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, comme définit dans le jeu de revendications.

## Revendications

1. Dispositif antivibratoire (1) muni d'un mécanisme résonateur (10) comportant au moins un résonateur (21, 22, 23, 24), ledit au moins un résonateur (21, 22, 23, 24) ayant au moins un batteur incluant un premier batteur (25) s'étendant d'une extrémité encastrée (27) à une extrémité libre (28) battante, ledit au moins un résonateur comportant un pied (30) déformable élastiquement,
**caractérisé en ce que** ledit pied (30) est muni d'une première branche (35) et d'une deuxième branche (40) reliées entre elles par un tronçon central (45), ladite extrémité encastrée (27) étant encastrée à la première branche (35), la première branche s'étendant d'une première extrémité (36) à une deuxième extrémité (37) configurées chacune pour être fixée rigidement à un support (4), la deuxième branche (40) s'étendant d'une première zone extrémale (41) à une deuxième zone extrémale (42) configurées chacune pour être fixée rigidement chacune à une source vibrante (2).

2. Dispositif antivibratoire selon la revendication 1,
**caractérisé en ce que** ledit dispositif antivibratoire (1) comportant au moins deux dits résonateurs (21, 22, 23, 24), lesdits deux résonateurs (21, 22, 23, 24) sont différents.

3. Dispositif antivibratoire selon l'une quelconque des revendications 1 à 2,
**caractérisé en ce que** ledit mécanisme résonateur (10) comporte au moins une paire (51) de deux dits résonateurs, les deux résonateurs (21, 22) d'une paire (51) étant agencés tête-bêche selon une direction (DIR), l'extrémité libre du premier batteur d'un résonateur (21) d'une paire (51) étant agencée selon ladite direction (DIR) entre le pied de ce résonateur (21) et l'extrémité libre du premier batteur de l'autre résonateur (22) de cette paire (51).

4. Dispositif antivibratoire selon l'une quelconque des revendications 1 à 3,
**caractérisé en ce que** ledit dispositif antivibratoire (1) comporte au moins une paire (51) de deux dits résonateurs, la première extrémité et la deuxième extrémité de la première branche d'un des deux résonateurs (21, 22) d'un paire (51) étant respectivement rigidement reliées par deux poutres de liaison (61, 62) à la première extrémité et à la deuxième extrémité de la première branche de l'autre résonateur (22) de cette paire (51), au moins une desdites deux poutres de liaison (61, 62) étant munie d'au moins une attache (70) pour être fixée rigidement au dit support (4).

5. Dispositif antivibratoire selon la revendication 4,
**caractérisé en ce que** ledit dispositif antivibratoire (1) comportant au moins deux dites paires (51, 52) de deux résonateurs (21-22, 53-24), une poutre de liaison (62) est commune aux deux paires (51, 52) de deux résonateurs.

6. Dispositif antivibratoire selon l'une quelconque des revendications 1 à 5,
**caractérisé en ce que** ledit dispositif antivibratoire (1) comporte au moins une paire (51) de deux dits résonateurs (21, 22), la première zone extrémale de la deuxième branche d'un résonateur (21) de ladite paire (51) étant rigidement reliée par une barre de liaison (71) à la première zone extrémale de la deuxième branche de l'autre résonateur (22) de cette paire (51), la deuxième zone extrémale de la deuxième branche d'un résonateur (21) de ladite paire (51) étant rigidement reliée par une barre de liaison (72) à la deuxième zone extrémale de la deuxième branche de l'autre résonateur (22) de cette paire (51) ou à la deuxième zone extrémale de la deuxième branche d'un résonateur (23) d'une autre paire (52).

7. Dispositif antivibratoire selon l'une quelconque des revendications 1 à 6,
**caractérisé en ce que** ledit dispositif antivibratoire (1) comporte au moins une butée (80) pour limiter le battement au moins dudit premier batteur (25).

8. Dispositif antivibratoire selon l'une quelconque des revendications 1 à 7,
**caractérisé en ce que** ledit dispositif antivibratoire (1) comporte au moins une entretoise (85) pour éviter un contact entre ledit support (4) et au moins ledit premier batteur (25) ou entre au moins le premier batteur (25) et la source vibrante (2).

9. Dispositif antivibratoire selon l'une quelconque des revendications 1 à 8,
**caractérisé en ce que** ledit mécanisme résonateur (10) forme un ensemble monolithique.

10. Dispositif antivibratoire selon l'une quelconque des revendications 1 à 9,
**caractérisé en ce que** ledit mécanisme résonateur (10) est plat en l'absence de déformation dudit au moins un batteur (25, 250), ledit mécanisme résonateur (10) ayant une épaisseur (90) constante.

11. Dispositif antivibratoire selon l'une quelconque des revendications 1 à 10,
**caractérisé en ce que** ledit dispositif antivibratoire (1) comprenant ledit support (4), ledit support (4) comporte au moins une lumière (5) en vis-à-vis de ladite extrémité libre (28).

12. Dispositif antivibratoire selon l'une quelconque des revendications 1 à 11,
**caractérisé en ce que** ledit dispositif antivibratoire (1) comprenant ladite source vibrante (2), ladite source vibrante (2) comporte au moins une découpe (3) en vis-à-vis de ladite extrémité libre (28).

13. Dispositif antivibratoire selon l'une quelconque des revendications 1 à 12,
**caractérisé en ce que** ladite première branche (35) et ladite deuxième branche (40) d'un dit résonateur (21) sont différentes ou identiques.

14. Dispositif antivibratoire selon l'une quelconque des revendications 1 à 13,
**caractérisé en ce que** ledit pied (30) a une forme de H .

15. Dispositif antivibratoire selon l'une quelconque des revendications 1 à 14,
**caractérisé en ce que** ledit au moins un résonateur comporte un deuxième batteur (250), le deuxième batteur (250 s'étendant d'une zone encastrée à une zone libre (28) battante, ladite zone encastrée (27) étant encastrée à la deuxième branche (40).

16. Véhicule (95),
**caractérisé en ce que** ledit véhicule (95) comporte un dispositif antivibratoire (1) selon l'une quelconque des revendications 1 à 15.

## Patentansprüche

1. Schwingungsdämpfungsvorrichtung (1) mit einem Resonatormechanismus (10), der mindestens einen Resonator (21, 22, 23, 24) umfasst, wobei der mindestens eine Resonator (21, 22, 23, 24) mindestens einen Schwinger aufweist, von dem ein erster Schwinger (25) sich von einem eingebetteten Ende (27) zu einem freien Schwingerende (28) erstreckt, wobei der mindestens eine Resonator einen elastisch verformbaren Fuß (30) umfasst,
**dadurch gekennzeichnet, dass** der Fuß (30) einen ersten Schenkel (35) und einen zweiten Schenkel (40) aufweist, die durch einen Mittelabschnitt (45) miteinander verbunden sind, wobei das eingebettete Ende (27) in den ersten Schenkel (35) eingebettet ist, wobei sich der erste Schenkel von einem ersten Ende (36) zu einem zweiten Ende (37) erstreckt, die jeweils konfiguriert sind, um starr an einem Träger (4) befestigt zu werden, und sich der zweite Schenkel (40) von einem ersten Endbereich (41) zu einem zweiten Endbereich (42) erstreckt, die jeweils konfiguriert sind, um starr an einer Schwingungsquelle (2) befestigt zu werden.

2. Schwingungsdämpfungsvorrichtung nach Anspruch 1,
**dadurch gekennzeichnet, dass** die Schwingungsdämpfungsvorrichtung (1) mindestens zwei der Resonatoren (21, 22, 23, 24) umfasst, wobei die beiden Resonatoren (21, 22, 23, 24) unterschiedlich sind.

3. Schwingungsdämpfungsvorrichtung nach einem der Ansprüche 1 bis 2,
**dadurch gekennzeichnet, dass** der Resonatormechanismus (10) mindestens ein Paar (51) von zweien der Resonatoren umfasst, wobei die beiden Resonatoren (21, 22) eines Paares (51) Kopf an Kopf in einer Richtung (DIR) angeordnet sind, wobei das freie Ende des ersten Schwingers eines Resonators (21) eines Paares (51) in der genannten Richtung (DIR) zwischen dem Fuß dieses Resonators (21) und dem freien Ende des ersten Schwingers des anderen Resonators (22) dieses Paares (51) angeordnet ist.

4. Schwingungsdämpfungsvorrichtung nach einem der Ansprüche 1 bis 3,
**dadurch gekennzeichnet, dass** die Schwingungsdämpfungsvorrichtung (1) mindestens ein Paar (51) von zweien der Resonatoren umfasst, wobei das erste Ende und das zweite Ende des ersten Schenkels eines der beiden Resonatoren (21, 22) eines Paars (51) jeweils durch zwei Verbindungsbalken (61, 62) mit dem ersten Ende und dem zweiten Ende des ersten Schenkels des anderen Resonators (22) dieses Paares (51) starr verbunden sind, und dass mindestens einer der beiden Verbindungsbalken (61, 62) mit mindestens einem Befestigungselement (70) versehen ist, um starr an dem Träger (4) befestigt zu werden.

5. Schwingungsdämpfungsvorrichtung nach Anspruch 4,
**dadurch gekennzeichnet, dass** die Schwingungsdämpfungsvorrichtung (1) mindestens zwei der Paare (51, 52) von zwei Resonatoren (21-22, 53-24) umfasst, wobei den beiden Paaren (51, 52) von zwei Resonatoren ein Verbindungsbalken (62) gemeinsam ist.

6. Schwingungsdämpfungsvorrichtung nach einem der Ansprüche 1 bis 5,
**dadurch gekennzeichnet, dass** die Schwingungsdämpfungsvorrichtung (1) mindestens ein Paar (51) von zweien der Resonatoren (21, 22) umfasst, wobei der erste Endbereich des zweiten Schenkels des einen Resonators (21) des Paars (51) durch einen Verbindungsbalken (71) starr mit dem ersten Endbereich des zweiten Schenkels des anderen Resonators (22) dieses Paars (51) verbunden ist, wobei der zweite Endbereich des zweiten Schenkels eines Resonators (21) des Paares (51) durch einen Verbindungsbalken (72) starr mit dem zweiten Endbereich des zweiten Schenkels des anderen Resonators (22) dieses Paares (51) oder mit dem zweiten Endbereich des zweiten Schenkels eines Resonators (23) eines anderen Paares (52) verbunden ist.

7. Schwingungsdämpfungsvorrichtung nach einem der Ansprüche 1 bis 6,
**dadurch gekennzeichnet, dass** die Schwingungsdämpfungsvorrichtung (1) mindestens einen Anschlag (80) zur Begrenzung der Auslenkung mindestens des ersten Schwingers (25) aufweist.

8. Schwingungsdämpfungsvorrichtung nach einem der Ansprüche 1 bis 7,
**dadurch gekennzeichnet, dass** die Schwingungsdämpfungsvorrichtung (1) mindestens einen Abstandshalter (85) umfasst, um den Kontakt zwischen dem Träger (4) und mindestens dem ersten Schwinger (25) oder zwischen mindestens dem ersten Schwinger (25) und der Schwingungsquelle (2) zu verhindern.

9. Schwingungsdämpfungsvorrichtung nach einem der Ansprüche 1 bis 8,
**dadurch gekennzeichnet, dass** der Resonatormechanismus (10) eine monolithische Anordnung bildet.

10. Schwingungsdämpfungsvorrichtung nach einem der Ansprüche 1 bis 9,
**dadurch gekennzeichnet, dass** der Resonatormechanismus (10) in Abwesenheit einer Verformung des mindestens einen Schwingers (25, 250) eben ist, und dass der Resonatormechanismus (10) eine konstante Dicke (90) aufweist.

11. Schwingungsdämpfungsvorrichtung nach einem der Ansprüche 1 bis 10,
**dadurch gekennzeichnet, dass** die Schwingungsdämpfungsvorrichtung (1) den Träger (4) umfasst, und dass der Träger (4) mindestens eine Aussparung (5) gegenüber dem freien Ende (28) aufweist.

12. Schwingungsdämpfungsvorrichtung nach einem der Ansprüche 1 bis 11,
**dadurch gekennzeichnet, dass** die Schwingungsdämpfungsvorrichtung (1) die Schwingungsquelle (2) umfasst, und dass die Schwingungsquelle (2) mindestens einen Ausschnitt (3) gegenüber dem freien Ende (28) aufweist.

13. Schwingungsdämpfungsvorrichtung nach einem der Ansprüche 1 bis 12,
**dadurch gekennzeichnet, dass** der erste Schenkel (35) und der zweite Schenkel (40) eines der Resonatoren (21) unterschiedlich oder identisch sind.

14. Schwingungsdämpfungsvorrichtung nach einem der Ansprüche 1 bis 13,
**dadurch gekennzeichnet, dass** der Fuß (30) H-förmig ist.

15. Schwingungsdämpfungsvorrichtung nach einem der Ansprüche 1 bis 14,
**dadurch gekennzeichnet, dass** der mindestens eine Resonator einen zweiten Schwinger (250) umfasst, wobei sich der zweite Schwinger (250) von einem eingebetteten Bereich zu einem Freischwingbereich (28) erstreckt, wobei der eingebettete Bereich (27) an dem zweiten Schenkel (40) eingebettet ist.

16. Fahrzeug (95),
**dadurch gekennzeichnet, dass** das Fahrzeug (95) eine Schwingungsdämpfungsvorrichtung (1) nach einem der Ansprüche 1 bis 15 aufweist.

## Claims

1. Anti-vibration device (1) having a resonating mechanism (10) consisting of at least one resonator (21, 22, 23, 24), said at least one resonator (21, 22, 23, 24) having at least one mixer including a first mixer (25) extending from a recessed end (27) to a mixing free end (28), said at least one resonator consisting of an elastically deformable base (30),
**characterised in that** said base (30) has a first branch (35) and a second branch (40) that are linked to one another by a central section (45), said recessed end (27) being recessed at the first branch (35), the first branch extending from a first end (36) to a second end (37) each configured to be rigidly fixed to a support (4), the second branch (40) extending from a first end zone (41) to a second end zone (42) each configured to be rigidly fixed to a vibration source (2).

2. Anti-vibration device according to claim 1,
**characterised in that** said anti-vibration device (1) consists of at least two devices known as resonators (21, 22, 23, 24), said two resonators (21, 22, 23, 24) being different.

3. Anti-vibration device according to any one of claims 1 and 2,
**characterised in that** said resonating mechanism (10) consists of at least one pair (51) of two devices known as resonators, the two resonators (21, 22) in a pair (51) being arranged head to tail in line with a direction (DIR), the free end of the first mixer of a resonator (21) of a pair (51) being arranged according to said direction (DIR) between the base of this resonator (21) and the free end of the first mixer of the other resonator (22) of this pair (51).

4. Anti-vibration device according to any one of claims 1 to 3,
**characterised in that** said anti-vibration device (1) consists of at least one pair (51) of two devices known as resonators, the first end and the second end of the first branch of one of two resonators (21, 22) of a pair (51) being respectively rigidly linked by two connecting beams (61, 62) at the first end and at the second end of the first branch of the other resonator (22) of said pair (51), at least one of said two connecting beams (61, 62) having at least one attachment (70) to be rigidly fixed to said support (4).

5. Anti-vibration device according to claim 4,
**characterised in that** said anti-vibration device (1) consists of at least two of said pairs (51, 52) of two resonators (21-22, 23-24), a connecting beam (62) is common to the two pairs (51, 52) of two resonators.

6. Anti-vibration device according to any one of claims 1 to 5,
**characterised in that** said anti-vibration device (1) consists of at least one pair (51) of said two resonators (21, 22), the first end zone of the second branch of a resonator (21) in said pair (51) being rigidly linked, by means of a connecting bar (71), to the first end zone of the second branch of the other resonator (22) of this pair (51), the second end zone of the second branch of a resonator (21) of said pair (51) being rigidly linked, by means of a connecting bar (72), to the second end zone of the second branch of the other resonator (22) of this pair (51) or the second end zone of the second branch of a resonator (23) of another pair (52).

7. Anti-vibration device according to any one of claims 1 to 6,
**characterised in that** said anti-vibration device (1) consists of at least one stop (80) to limit the mixing to at least said first mixer (25).

8. Anti-vibration device according to any one of claims 1 to 7,
**characterised in that** said anti-vibration device (1) consists of at least one spacer (85) to avoid contact between said support (4) and at least said first mixer (25) or between at least the first mixer (25) and the vibration source (2).

9. Anti-vibration device according to any one of claims 1 to 8,
**characterised in that** said resonating mechanism (10) forms a monolithic assembly.

10. Anti-vibration device according to any one of claims 1 to 9, **characterised in that** said resonating mechanism (10) is flat in the absence of any deformation of said at least one mixer (25, 250), said resonating mechanism (10) having a constant thickness (90).

11. Anti-vibration device according to any one of claims 1 to 10,
**characterised in that** said anti-vibration device (1) consists of said support (4), said support (4) consists of at least one light (5) opposite said free end (28).

12. Anti-vibration device according to any one of claims 1 to 11,
**characterised in that** said anti-vibration device (1) consists of said vibration source (2), said vibration source (2) consisting of at 10 least one cut (3) opposite said free end (28).

13. Anti-vibration device according to any one of claims 1 to 12,
**characterised in that** said first branch (35) and said second branch (40) of a said resonator (21) are different or identical.

14. Anti-vibration device according to any one of claims 1 to 13,
**characterised in that** said base (30) is in the shape of an H.

15. Anti-vibration device according to any one of claims 1 to 14,
**characterised in that** said at least one resonator consists of a second mixer (250), the second mixer (250) extending from a recessed zone to a mixing free zone (28), said recessed zone (27) being recessed at the second branch (40).

16. Vehicle (95)
**characterised in that** said vehicle (95) consists of an anti-vibration device (1) according to any one of claims 1 to 15.
